# EUROPEAN PATENT APPLICATION

(11) **EP 3 809 675 A1**
(43) Date of publication of application: **21.04.2021**
(21) Application number: 20214229.5
(22) Date of filing: 21.05.2018
(51) Int. Cl.: H04L 29/08, G06F 16/901, H04L 29/06

(54) **BIG-DATA-BASED BUSINESS LOGIC LEARNING METHOD AND PROTECTION METHOD AND APPARATUSES THEREOF**

(30) Priority: 26.04.2018 CN 201810385971
(62) Divisional of application: 18904497.7
(71) Applicant: Wangsu Science & Technology Co., Ltd., Shanghai 200030 (CN)
(72) Inventor: HUANG, Meifen, Xuhui District, Shanghai 200030 (CN)
(74) Representative: Vinsome, Rex Martin

(57) **Abstract**

The present disclosure discloses methods and apparatuses for learning and protecting business logic based on big data. The learning method includes: receiving a network request sent by a requester, recognizing a current request identifier of the network request, and parsing procedure information of the network request; extracting a reference request identifier from the procedure information, determining whether a direction from the reference request identifier to the current request identifier exists in a procedure direction table, and updating the procedure direction table based on a determination result; and distributing tracking code for the network request, where the tracking code includes the current request identifier and a timestamp for distributing the tracking code. The technical solutions provided in the present disclosure can improve efficiency of protecting business logic based on big data, can be applied to various business logic scenarios, and can flexibly adapt to various changes in business logic requirements.

## Description

### TECHNICAL FIELD

The present application relates to the field of Internet technologies, and in particular, to big-data-based business logic learning and protection methods and apparatuses thereof.

### BACKGROUND

With constant development of the Internet and computer technologies, complexity of business systems also increases constantly with development of business requirements, and business diversity makes logic branches extended from primary business logic, and business logic thus becomes more complex. Complex business logic often has some defects, and the defects of the business logic may generate some vulnerabilities. For example, when the business logic of an order has a vulnerability, the order amount may be modified arbitrarily, thereby causing a severe financial problem.

The existing protection measures for the business logic are usually performed for multiple verifying or manual verifying the business logic. However, these measures often relate to a complex authentication process, which would waste more resources, and thus the protection efficiency is not high and the user experience is degraded.

### SUMMARY

An objective of the present disclosure is to provide big-data-based business logic learning and protection methods and apparatuses, to improve efficiency of protecting business logic. The methods and the apparatuses can be applied to various business logic scenarios, and can flexibly adapt to various changes in business logic requirements.

To achieve the foregoing objective, an aspect of the present disclosure provides a big-data-based business logic learning method. The method includes: receiving a network request sent by a requester, recognizing a current request identifier of the network request, and parsing procedure information of the network request; extracting a reference request identifier from the procedure information, determining whether a direction from the reference request identifier to the current request identifier exists in a procedure direction table, and updating the procedure direction table based on a determination result; and distributing tracking code for the network request when responding to the network request, where the tracking code includes the current request identifier and a timestamp for distributing the tracking code; and adding, by the tracking code, the current request identifier and the timestamp to procedure information of a new network request when the new network request is initiated again based on the network request.

To achieve the foregoing objective, another aspect of the present disclosure further provides a big-data-based business logic learning apparatus. The apparatus includes a memory and a processor, where the memory stores a computer program, and when executed by the processor, the computer program performs the following steps: receiving a network request sent by a requester, recognizing a current request identifier of the network request, and parsing procedure information of the network request; extracting a reference request identifier from the procedure information, determining whether a direction from the reference request identifier to the current request identifier exists in a procedure direction table, and updating the procedure direction table based on a determination result; and distributing tracking code for the network request when responding to the network request, where the tracking code includes the current request identifier and a timestamp for distributing the tracking code; and adding, by the tracking code, the current request identifier and the timestamp to procedure information of a new network request when the new network request is initiated again based on the network request.

To achieve the foregoing objective, another aspect of the present disclosure further provides a big-data-based business logic protection method. The method includes: receiving a network request sent by a requester, and recognizing a current request identifier of the network request; extracting a reference request identifier from procedure information of the network request if the current request identifier is not a startpoint request identifier, and determining whether a direction from the reference request identifier to the current request identifier exists in a procedure direction table; and if the direction exists in the procedure direction table, calculating a time difference between a current time for receiving the network request and a timestamp that is of the reference request identifier and that is recorded in the procedure information; and determining whether the calculated time difference is within a time difference range that is between the current request identifier and the reference request identifier and that is recorded in the procedure direction table; if the calculated time difference is not within the time difference range, returning to a startpoint request identifier in a requesting procedure in which the current request identifier is located; and distributing tracking code for a network request corresponding to the startpoint request identifier when responding to the network request corresponding to the startpoint request identifier, where the tracking code includes the startpoint request identifier and a timestamp for distributing the tracking code.

To achieve the foregoing objective, another aspect of the present disclosure further provides a big-data-based business logic protection apparatus. The apparatus includes a memory and a processor, where the memory stores a computer program, and when executed by the processor, the computer program performs the following steps: receiving a network request sent by a requester, and recognizing a current request identifier of the network request; extracting a reference request identifier from procedure information of the network request if the current request identifier is not a startpoint request identifier, and determining whether a direction from the reference request identifier to the current request identifier exists in a procedure direction table; and if the direction exists in the procedure direction table, calculating a time difference between a current time for receiving the network request and a timestamp that is of the reference request identifier and that is recorded in the procedure information; and determining whether the calculated time difference is within a time difference range that is between the current request identifier and the reference request identifier and that is recorded in the procedure direction table; if the calculated time difference is not within the time difference range, returning to a startpoint request identifier in a requesting procedure in which the current request identifier is located; and distributing tracking code for a network request corresponding to the startpoint request identifier when responding to the network request corresponding to the startpoint request identifier, where the tracking code includes the startpoint request identifier and a timestamp for distributing the tracking code.

Thus, according to the technical solution provided in the present disclosure, on the one hand, business logic may be learned for a large quantity of network requests according to big data based learning, and thereby obtaining a normal requesting procedure. Specifically, after a network request is received, a current request identifier of the network request can be identified, and procedure information of the network request is parsed. The current request identifier may uniquely represent the network request, and a reference request identifier in the procedure information may represent a reference page of the network request. In this way, a direction from the reference request identifier to the current request identifier may be constructed, and a procedure direction table is updated according to the direction. Subsequently, tracking code may be distributed when responding to the network request, and the tracking code may include the current request identifier and a timestamp for distributing the tracking code. In this way, the tracking code may add the current request identifier and the timestamp to procedure information of a new network request when the new network request is initiated again based on the network request, so that the current request identifier is taken as a reference request identifier of the new network request. After analyzing a large number of network requests by big data based learning in the foregoing manners, the procedure direction table may be gradually improved, thereby obtaining a normal requesting procedure. On the other hand, when a network request received needs to be analyzed, a current request identifier of the network request may be identified, and a reference request identifier of the network request may be obtained through analysis. Then, whether the direction from the reference request identifier to the current request identifier exists in the procedure direction table obtained through learning may be determined. Further, whether a time difference corresponding to the direction is within a normal range of time difference may be analyzed, so as to determine whether the network request comply with normal business logic. If the network request does not comply with the normal business logic, the process may return to a startpoint request identifier in a requesting procedure in which the current request identifier is located, so as to restart a business logic accessing process. As can be seen from the above, according to the technical solutions provided in the present disclosure, big data based learning is performed for different business logics, and daily business logic is protected according to a learning result, so that unknown and hidden vulnerabilities may be effectively prevented from being used by attackers. In addition, since protection is performed after big data based learning is performed, the technical solutions in the present disclosure may be applied to various business logic scenarios, which may flexibly adapt to various changes in business logic requirements. In addition, a complex authentication process is also avoided, and a lot of resources can be saved, thereby improving efficiency of protecting business logic.

### BRIEF DESCRIPTION OF THE DRAWINGS

To describe the technical solutions in the embodiments of the present disclosure more clearly, the following briefly describes the drawings required for describing the embodiments. Apparently, the drawings in the following descriptions merely illustrate some embodiments of the present disclosure, and a person of ordinary skill in the art may obtain other drawings from these drawings without creative efforts.
Fig. 1 is a flowchart of a big-data-based business logic learning method according to an embodiment of the present disclosure;
Fig. 2 is a structural diagram of a big-data-based business logic learning apparatus according to an embodiment of the present disclosure;
Fig. 3 is a flowchart of a big-data-based business logic protection method according to an embodiment of the present disclosure; and
Fig. 4 is a structural schematic structural diagram of a computer terminal according to an embodiment of the present disclosure.

### DETAILED DESCRIPTION

To make the objections, technical solutions, and advantages of the present disclosure clearer, the following further describes the embodiments of the present disclosure in details with reference to the drawings.

### The First Embodiment

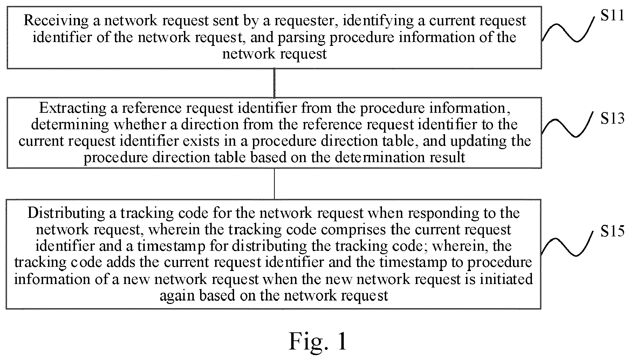

The present disclosure provides a big-data-based business logic learning method. Referring to Fig. 1, the method may include the following steps.

At S11, receiving a network request sent by a requester, identifying a current request identifier of the network request, and parsing procedure information of the network request.

In this embodiment, the network request may be an HTTP request including a uniform resource locator (URL). For a large number of network requests, the network requests may be classified according to parameters carried in the network requests, network requests of the same type are formatted into formatted requests of a same parameter type, and the large number of network requests may be formatted into formatted requests of different parameter types through classification. For example, URLs of the network requests are http: //www.xx.com/xx.php?a=1 and http: //www.xx.com/xx.php?a=2, where a parameter such as a=1 or a=2 carried in these URLs may be formatted uniformly into an integer formatted request http: //www.xx.com/xx.php?a=[d]. Referring to Table 1, formatted requests may be classified into integer requests, string requests, hybrid requests, enumerative requests, and other requests. As shown in Table 1, the type of an integer formatted request may be represented by using a parameter a=[d]; the type of a string formatted request may be represented by using a parameter a=[s]; the type of a hybrid formatted request may be represented by using a parameter a=[m]; the types of enumerative formatted requests may be listed one by one according to different parameters, for example, a=add and a=delete in Table 1; and the type of another type of formatted requests may be represented by using a parameter a=[e].

**Table 1 Schematic table of a correspondence between the type of a network request and a formatted request**

| **Type of a network request** | **Formatted request** |
|---|---|
| Integer type | http://www.xx.com/xx.php?a=[d] |
| String type | http://www.xx.com/xx.php?a=[s] |
| Hybrid type | http://www.xx.com/xx.php?a=[m] |
| Enumerative type | http://www.xx. com/xx. php?a=add |
| | http://www.xx.com/xx. php?a=delete |
| Another type | http://www.xx.com/xx.php?a=[e] |

In this embodiment, a unique identifier may be allocated to each formatted request. The unique identifier may be generated according to a fixed format. Specifically, the unique identifier may be formed by three random letters of a to z and numbers of 0 to 9. For example, after the network request sent by the requester is received, the network request is classified. The network request is formatted into a formatted request of a corresponding parameter type. Then, a unique identifier is allocated to the formatted request, and the unique identifier allocated to the formatted request is taken as the current request identifier of the network request. If requesting paths are different, different unique identifiers are finally allocated to formatted requests of the a same parameter type.

In this embodiment, the network request includes procedure information, and the procedure information may represent a network request based on which the network request is sent. For example, if a currently received network request is a request A, and the request A is initiated in a page to which a request B points, procedure information of the request A may represent that the current request A is initiated based on the request B, or the request B may be understood as the upper level request of the current request A. Therefore, the procedure information may include a reference request identifier and a timestamp corresponding to the reference request identifier. Therefore, it may be obtained from the procedure information that the currently received network request is initiated based on a network request corresponding to the reference request identifier.

At S13, extracting a reference request identifier from the procedure information, determining whether a direction from the reference request identifier to the current request identifier exists in a procedure direction table, and updating the procedure direction table based on the determination result.

In this embodiment, after the procedure information is parsed from the network request, it indicates that the network request has an upper level network request. In this way, the reference request identifier may be extracted from the procedure information, and therefore, the direction from the reference request identifier to the current request identifier may be obtained. For example, if the reference request identifier is a02, and the current request identifier is b01, the direction from a02 to b01 may be obtained.

In this embodiment, directions between network requests may be recorded in the procedure direction table. In this case, after the direction from the reference request identifier to the current request identifier is obtained, whether the direction exists in the procedure direction table may be determined, and the procedure direction table may be updated according to the determination result. Specifically, a total traffic amount of the direction may be increased by 1 if the direction from the reference request identifier to the current request identifier exists in the procedure direction table, and thereby the total traffic amount of the direction is accumulated. Then, a time difference between directions is updated. Specifically, a range of time difference between the current request identifier and the reference request identifier recorded in the procedure direction table may be read, a time difference between a current time when the network request is received and a timestamp of the reference request identifier recorded in the procedure information is calculated; then, whether the calculated time difference is within the range of time difference recorded in the procedure direction table is determined, and the range of time difference is updated based on the determination result. Specifically, there may be a plurality of cases when the range of time difference is updated. If the calculated time difference is less than a minimum value within the range of time difference, the minimum value of the range of time difference may be updated as the calculated time difference. For example, if the range of time difference is 0.2s to Is, and the calculated time difference is 0.1s, the range of time difference may be updated as 0.1s to Is. If the calculated time difference is greater than a maximum value of the range of time difference, the maximum value of the range of time difference is updated as the calculated time difference. For example, if the range of time difference is 0.2s to Is, and the calculated time difference is 1.5s, the range of time difference may be updated as 0.2s to 1.5s. If the calculated time difference is within the time difference range, the range of time difference may remain unchanged.

In an embodiment, the range of time difference recorded in the procedure direction table may be only a constant value rather than a time interval. In this case, the calculated time difference may be compared with the constant value. If the calculated time difference is less than the constant value, the range of time difference may be updated as an interval with the calculated time difference being the minimum value and the constant value being the maximum value. For example, if the constant value is 0.2s, and the calculated time difference is 0.1s, the range of time difference may be updated as 0.1s to 0.2s. In addition, if the calculated time difference is greater than the constant value, the range of time difference may be updated as an interval with the constant value being the minimum value is and the calculated time difference being the maximum value. For example, if the constant value is 0.2s, and the calculated time difference is 0.5s, the range of time difference may be updated as 0.2s to 0.5s. Certainly, if the calculated time difference is the same as the constant value, the range of time difference may remain unchanged.

In an embodiment, the direction from the reference request identifier to the current request identifier may be created in the procedure direction table if the direction does not exist in the procedure direction table, a total traffic amount of the direction is set to 1, and a time difference between a current time when the network request is received and a timestamp of the reference request identifier recorded in the procedure information is recorded as a time difference of the direction. Subsequently, if a same direction shows up, the created direction may be updated.

In an embodiment, if the network request does not include the procedure information, it indicates that the network request is not initiated based on another network request, but is taken as a startpoint of a network request. In this case, the tracking code may be distributed for the network request when responding to the network request, where, the tracking code comprises the current request identifier and a timestamp for distributing the tracking code. The tracking code may be used to add the current request identifier and the timestamp to procedure information of a new network request when the new network request is initiated again based on the network request. For example, if a currently received network request is a request A, and the request A does not include procedure information, the tracking code may be distributed for the request A when responding to the request A. The tracking code may include a current request identifier a01 (that is, a unique identifier of a formatted request corresponding to the request A) of the request A and the timestamp for distributing the tracking code. When a new request B is initiated in a page to which the request A points, the tracking code may use a01 as the reference request identifier and add a01 to procedure information of the request B, and add the timestamp for distributing the tracking code to the procedure information of the request B. The timestamp may be used to calculate the time difference corresponding to the direction from the current request identifier to the reference request identifier.

At S15, distributing a tracking code for the network request when responding to the network request, wherein the tracking code comprises the current request identifier and a timestamp for distributing the tracking code; wherein, the tracking code adds the current request identifier and the timestamp to procedure information of a new network request when the new network request is initiated again based on the network request.

In this embodiment, after the procedure direction table is updated based on the determination result in step S13, the tracking code may be distributed for the network request when responding to the network request, wherein the tracking code comprises the current request identifier and a timestamp for distributing the tracking code. Similar to the description in step S13, the tracking code may be used to add the current request identifier and the timestamp to procedure information of a new network request when the new network request is initiated again based on the network request. In this way, the procedure information of the new network request may be updated by distributing the tracking code.

Generally, there may be a plurality of scenarios when the tracking code adds a request identifier and timestamp in actual application. One scenario is that specified labels in a document on a page to which the network request points may be traversed before the page is loaded, and the current request identifier and the timestamp are added to a network request corresponding to the specified labels. The specified labels may be, for example, an A label, a form label, or an iframe label. Each of these labels may refer to a new network request. Therefore, the tracking code may add corresponding procedure information for network requests corresponding to these labels. In addition, whether a hidden input label needs to be added to the network request corresponding to the specified labels may be determined, according to parameters carried in the network request corresponding to the specified labels. For example, if the network request corresponding to the specified labels is a POST request, a hidden input label may be added.

Another scenario is that a function for implementing page jumping and dynamically initiating a request may be hooked. The function may be, for example, a window. open function or an XMLHTTPRequest function. In this case, the current request identifier and the timestamp may be added to a network request corresponding to the function for implementing page jumping and dynamically initiating a request.

Still another scenario is that a function for dynamically adding a page may be hooked. The function may be, for example, an appendChild function or an innerHTML function. In this case, the current request identifier and the timestamp are added to a network request corresponding to specified labels when the function for dynamically adding a page adds the specified labels. The specified labels may be, for example, the foregoing A label, form label, or iframe label.

In an embodiment, after directions in the procedure direction table are updated, traffic in and traffic out information of respective request identifiers are counted according to respective directions recorded in the procedure direction table. A request identifier having traffic in and traffic out information satisfying a specified condition may be used as a startpoint request identifier. The startpoint request identifier may be used as a startpoint of a requesting procedure. Specifically, a request identifier having a ratio of traffic in to traffic out less than or equal to a first threshold, and a ratio of the traffic in to total traffic is less than a second threshold, is used as the startpoint request identifier. The first threshold may be, for example, 1/4, and the second threshold may be, for example, 1/6. Certainly, in actual application, specific values of the first threshold and the second threshold may be flexibly adjusted. This is not limited in the present disclosure.

In this embodiment, after the startpoint request identifier is determined, a requesting procedure corresponding to the startpoint request identifier may be counted. For example, when taking a as a startpoint request identifier, the direction would be:
a -> b, a -> c, a -> d, b -> c, b -> d, c -> b, and c -> d.

Based on the foregoing directions, the following requesting procedure may be obtained through counting:
a -> b -> c -> b, a -> b -> c -> d, a -> b -> d, a -> c -> b -> c, a -> c -> d, and a -> d.

In the foregoing requesting procedure, two neighboring request identifiers may have a range of time difference.

In this way, after learning with respect to a large number of network requests by big data based learning, a relatively complete procedure direction table may be obtained, thereby obtaining a normal requesting procedure of business logic.

### Second embodiment

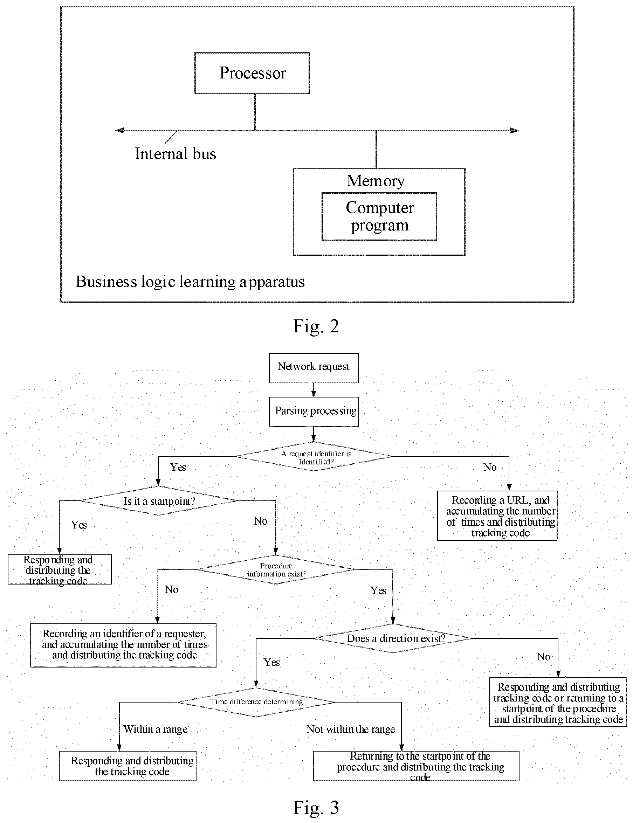

Referring to Fig. 2, the present disclosure further provides a big-data-based business logic learning apparatus. The apparatus includes a memory and a processor, where the memory stores a computer program, and when executed by the processor, the computer program performs the following steps:
receiving a network request sent by a requester, identifying a current request identifier of the network request, and parsing procedure information of the network request;
extracting a reference request identifier from the procedure information, determining whether a direction from the reference request identifier to the current request identifier exists in a procedure direction table, and updating the procedure direction table based on the determination result; and
distributing a tracking code for the network request when responding to the network request, wherein the tracking code comprises the current request identifier and a timestamp for distributing the tracking code; wherein, the tracking code adds the current request identifier and the timestamp to procedure information of a new network request when the new network request is initiated again based on the network request.

In this embodiment, the memory may include a physical apparatus configured to store information. Usually, after being digitized, the information is stored in media by using electrical, magnetic, and optical processes, or the like. The memory in this embodiment may include: an apparatus storing information by using electric energy, for example, a RAM or a ROM; an apparatus storing information by using magnetic energy, for example, a hard disk, a floppy disk, a magnetic tape, a magnetic core memory, a bubble memory, or a USB flash drive; and an apparatus storing information in an optical manner, for example, a CD or a DVD. Certainly, there are other computer storage mediums, for example, a quantum memory and a graphene memory.

In this embodiment, the processor may be implemented in any suitable manner. For example, the processor may be, for example, a microprocessor or a processor, a computer-readable medium storing computer readable program code (for example, software or firmware) that may be executed by the (micro)processor, a logic gate, a switch, an application-specific integrated circuit (ASIC), a programmable logical controller, or an embedded microcontroller.

The specific function implemented by the big-data-based business logic learning apparatus provided in this embodiment of the present disclosure may be explained with reference to the foregoing embodiment in the present disclosure, and the technical effects of thereof may be similarly achieved. Details are not described herein again.

### Third Embodiment

After a business logic learning process is completed based on big data learning, the present disclosure further provides a big-data-based business logic protection method. Referring to Fig. 3, the method includes the following steps.

At S21, receiving a network request sent by a requester, and identifying a current request identifier of the network request. In this embodiment, after the network request is received, business logic of the network request may be determined. Specifically, the network request may be firstly formatted into a formatted request of a corresponding parameter type. From the learning method in the first embodiment, each formatted request corresponds to a unique identifier, and whether the formatted request has the corresponding unique identifier is queried in the learning result.

It should be noted that if a unique identifier of the formatted request corresponding to the network request cannot be found, it indicates that the network request does not have a corresponding learning sample in the learning process. In this case, a URL of the network request may be recorded, and the number of times that the URL appears may be accumulated. In addition, in order to improve the requesting procedure, tracking code may be distributed for the network request, and the tracking code may include a current request identifier of the network request and a timestamp for distributing the tracking code.

At S23, parsing a reference request identifier from procedure information of the network request if the current request identifier is not a startpoint request identifier, and determining whether a direction from the reference request identifier to the current request identifier exists in a procedure direction table; and if the direction exists in the procedure direction table, calculating a time difference between a current time when the network request is received and a timestamp of the reference request identifier recorded in the procedure information.

In this embodiment, after the current request identifier is identified, whether the current request identifier is a startpoint request identifier may be determined according to the startpoint request identifier determined at the learning stage. Referring to Fig. 3, if the current request identifier is the startpoint request identifier, it indicates that the network request is not initiated based on another network request, but is a startpoint of a requesting procedure. In this case, the tracking code may be distributed for the network request when responding to the network request, and the tracking code may include the current request identifier and a timestamp for distributing the tracking code. In this way, the tracking code may add the current request identifier and the timestamp to procedure information of a new network request when the new network request is initiated again based on the network request, so that a subsequent requesting procedure is tracked.

In this embodiment, if the current request identifier is not the startpoint request identifier, it indicates that the network request shall be initiated based on another network request, and the network request shall carry procedure information. In this case, whether the network request carries the procedure information may be determined. If the network request does not carry the procedure information, it indicates that the network request does not conform to a normal business logic, and may be a problematic network request. In this case, an identifier of the requester sending the network request may be recorded, and the number of times that the requester sends the network request with no procedure information within a specified period is accumulated. If the requester keeps sending network requests with no procedure information within a short period of time, it indicates that the requester is a problematic requester, and the requester may attempt to destroy the normal business logic. In this case, the network request sent by the requester may be rejected when the accumulated number of times reaches a threshold for number of times. In this embodiment, after the accumulated number of times reaches the a threshold for number of times, the tracking code may be distributed for the network request when responding to the network request, and the tracking code may include the current request identifier and the timestamp for distributing the tracking code, so that the network request is tracked.

In this embodiment, if the network request has procedure information, the reference request identifier may be parsed from the procedure information of the network request, and whether the direction from the reference request identifier to the current request identifier exists in the procedure direction table is determined. If the direction does not exist in the procedure direction table, it indicates that the direction is an incorrect direction, which does not conform to the normal business logic. In this case, on one hand, the tracking code may be distributed for the network request when responding to the network request, where tracking information corresponding to the tracking code is the timestamp for distributing the tracking code and a set of the procedure information of the network request and the current request identifier. In this way, a subsequent requesting procedure of the network request may be tracked. On the other hand, a startpoint request identifier in a requesting procedure in which the current request identifier is located may directly be returned to, so as to restart a business logic access process. Then, the tracking code is distributed for a network request corresponding to the startpoint request identifier when responding to the network request corresponding to the startpoint request identifier , and the tracking code includes the startpoint request identifier and the timestamp for distributing the tracking code, so that a re-initiated network request is to be tracked continuously.

In this embodiment, if the direction exists in the procedure direction table obtained by learning, whether a time difference of the direction is correct may further be determined. Specifically, the time difference between the current time when the network request is received and the timestamp of the reference request identifier recorded in the procedure information may be calculated.

At S25, determining whether the calculated time difference is within a range of time difference between the current request identifier and the reference request identifier recorded in the procedure direction table; if the calculated time difference is not within the range of time difference, returning to a startpoint request identifier in a requesting procedure in which the current request identifier is located; and distributing a tracking code for a network request corresponding to the startpoint request identifier when responding to the network request corresponding to the startpoint request identifier, wherein the tracking code comprises the startpoint request identifier and a timestamp for distributing the tracking code.

In this embodiment, after the time difference is calculated, the time difference may be compared with the range of time difference recorded in the procedure direction table. Specifically, if the calculated time difference is within the range of time difference, it indicates that the network request conforms to the normal business logic. In this case, the tracking code may be distributed for the network request when responding to the network request, wherein the tracking information corresponding to the tracking code comprises the timestamp for distributing the tracking code and a set of the procedure information of the network request and the current request identifier. In this way, a subsequent network request may be tracked to protect the subsequent network request. However, if the calculated time difference is not within the range of time difference, it indicates that there is a problem in the current network request. In this case, the startpoint request identifier in the requesting procedure in which the current request identifier is located may be returned to, so as to restart the business logic access process. Then, the tracking code may be distributed for a network request corresponding to the startpoint request identifier when responding to the network request corresponding to the startpoint request identifier, and the tracking code includes the startpoint request identifier and the timestamp for distributing the tracking code, so that a re-initiated network request continues to be tracked, and a corresponding protection process is performed.

It should be noted that the tracking code is usually distributed on a page with a content type of text/html and a returning state code of 200. On a page with a returning state code of 30X, a location address may be modified and procedure information is tracked.

### Fourth Embodiment

The present disclosure further provides a big-data-based business logic protection apparatus. The apparatus includes a memory and a processor, where the memory stores a computer program, and when executed by the processor, the computer program performs the following steps:
receiving a network request sent by a requester, and identifying a current request identifier of the network request;
parsing a reference request identifier from procedure information of the network request if the current request identifier is not a startpoint request identifier, and determining whether a direction from the reference request identifier to the current request identifier exists in a procedure direction table; and if the direction exists in the procedure direction table, calculating a time difference between a current time when the network request is received and a timestamp of the reference request identifier recorded in the procedure information; and
determining whether the calculated time difference is within a range of time difference between the current request identifier and the reference request identifier recorded in the procedure direction table; if the calculated time difference is not within the range of time difference, returning to a startpoint request identifier in a requesting procedure in which the current request identifier is located; and distributing a tracking code for a network request corresponding to the startpoint request identifier when responding to the network request corresponding to the startpoint request identifier, wherein the tracking code comprises the startpoint request identifier and a timestamp for distributing the tracking code.

In this embodiment, the memory may include a physical apparatus configured to store information. Usually, after being digitized, the information is stored in media by using electrical, magnetic, and optical processes, or the like. The memory in this embodiment may include: an apparatus storing information by using electric energy, for example, a RAM or a ROM; an apparatus storing information by using magnetic energy, for example, a hard disk, a floppy disk, a magnetic tape, a magnetic core memory, a bubble memory, or a USB flash drive; and an apparatus storing information in an optical manner, for example, a CD or a DVD. Certainly, there are other computer storage mediums, for example, a quantum memory and a graphene memory.

In this embodiment, the processor may be implemented in any suitable manner. For example, the processor may be, for example, a microprocessor or a processor, a computer-readable medium storing computer readable program code (for example, software or firmware) that may be executed by the (micro)processor, a logic gate, a switch, an application-specific integrated circuit (ASIC), a programmable logical controller, or an embedded microcontroller.

The specific function implemented by the big-data-based business logic protection apparatus provided in this embodiment of the present disclosure may be explained with reference to the foregoing embodiment in the present disclosure, and the technical effects of thereof may be similarly achieved. Details are not described herein again.

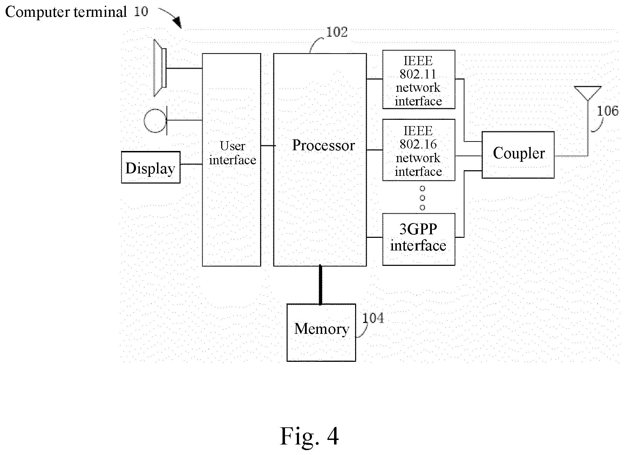

Referring to Fig. 4, in the present disclosure, the technical solutions in the foregoing embodiments may be applied to a computer terminal 10 shown in Fig. 4. The computer terminal 10 may include: one or more (only one shown in the Fig.4) processors 102 (the processor 102 may include, but is not limited to, a processing apparatus such as a microprocessor MCU or a programmable logic device FPGA), a memory 104 configured to store data, and a transmission module 106 configured for perform a communication function.

A person of ordinary skill in the art may understand that Fig. 4 merely shows a schematic structure, which does not constitute any limitation to the structure of the foregoing electronic apparatus. For example, the computer terminal 10 may also include more or fewer components than those shown in Fig. 4, or have a configuration different from that shown in Fig. 4.

Specifically, in the present disclosure, the foregoing business logic learning and protecting methods may be stored in the memory 104 as computer programs. The memory 104 may be coupled to the processor 102, so that when the processor 102 executes the computer programs in the memory 104, steps of the foregoing business logic learning and protecting methods may be performed.

The memory 104 may be configured to store a software program and modules of application software. The processor 102 runs the software program and modules stored in the memory 104, thereby implementing various function applications and data processing. The memory 104 may include a high-speed random memory, and may further include a nonvolatile memory such as one or more magnetic storage devices, a flash memory, or another nonvolatile solid-state memory. In some embodiments, the memory 104 may further include memories disposed remotely from the processor 102, and these remote memories may be connected to the computer terminal 10 through a network. Examples of the network include, but are not limited to, the Internet, an intranet, a local area network, a mobile communications network, and a combination thereof.

The transmission module 106 is configured to receive or send data through a network. The foregoing examples of the network may include a wireless network provided by a communication provider of the computer terminal 10. In an example, the transmission module 106 includes one network adapter (Network Interface Controller, NIC), which may be connected to other network devices through a base station so as to communicate with the Internet. In an example, the transmission module 106 may be a radio frequency (RF) module, which is configured to communicate with the Internet in a wireless manner.

Thus, according to the technical solution provided in the present disclosure, on the one hand, business logic may be learned for a large quantity of network requests according to big data based learning, and thereby obtaining a normal requesting procedure. Specifically, after a network request is received, a current request identifier of the network request can be identified, and procedure information of the network request is parsed. The current request identifier may uniquely represent the network request, and a reference request identifier in the procedure information may represent a reference page of the network request. In this way, a direction from the reference request identifier to the current request identifier may be constructed, and a procedure direction table is updated according to the direction. Subsequently, tracking code may be distributed when responding to the network request, and the tracking code may include the current request identifier and a timestamp for distributing the tracking code. In this way, the tracking code may add the current request identifier and the timestamp to procedure information of a new network request when the new network request is initiated again based on the network request, so that the current request identifier is taken as a reference request identifier of the new network request. After analyzing a large number of network requests by big data based learning in the foregoing manners, the procedure direction table may be gradually improved, thereby obtaining a normal requesting procedure. On the other hand, when a network request received needs to be analyzed, a current request identifier of the network request may be identified, and a reference request identifier of the network request may be obtained through analysis. Then, whether the direction from the reference request identifier to the current request identifier exists in the procedure direction table obtained through learning may be determined. Further, whether a time difference corresponding to the direction is within a normal range of time difference may be analyzed, so as to determine whether the network request comply with normal business logic. If the network request does not comply with the normal business logic, the process may return to a startpoint request identifier in a requesting procedure in which the current request identifier is located, so as to restart a business logic accessing process. As can be seen from the above, according to the technical solutions provided in the present disclosure, big data based learning is performed for different business logics, and daily business logic is protected according to a learning result, so that unknown and hidden vulnerabilities may be effectively prevented from being used by attackers. In addition, since protection is performed after big data based learning is performed, the technical solutions in the present disclosure may be applied to various business logic scenarios, which may flexibly adapt to various changes in business logic requirements. In addition, a complex authentication process is also avoided, and a lot of resources can be saved, thereby improving efficiency of protecting business logic.

Through the description of the foregoing implementations, a person of ordinary skill in the art may clearly understand that each embodiment may be implemented by using software plus a necessary general hardware platform, or may be implemented by using hardware. Based on such understanding, the foregoing technical solutions essentially or the part contributing to the prior art may be reflected in a form of a software product, and the computer software product may be stored in a computer readable storage medium, such as a ROM/RAM, a magnetic disk, or an optical disc, and include a plurality of instructions for enabling a computer device (which may be a personal computer, a server, or a network device) to execute each embodiment or the process of some embodiments.

The foregoing descriptions are merely preferred embodiments of the present disclosure, but are not intended to limit the present disclosure. Any modification, equivalent replacement, or improvement made within the principle of the present disclosure shall fall within the protection scope of the present disclosure.

## Claims

1. A big-data-based business logic protection method, comprising:
receiving a network request sent by a requester, and identifying a current request identifier of the network request;
determining whether the network request carries procedure information if the current request identifier is not a startpoint request identifier;
and if the network request does not carry the procedure information,
recording an identifier of the requester,
accumulating the number of times that the requester sends the network request with no procedure information within a specified period, and
rejecting the network request sent by the requester when the accumulated number of times reaches a threshold for number of times, or, distributing, after the accumulated number of times reaches a threshold for number of times, a tracking code for the network request when responding to the network request;
wherein the tracking code comprises the current request identifier and a timestamp for distributing the tracking code.

2. The method according to claim 1, further comprising: if the network request carries the procedure information,
parsing a reference request identifier from the procedure information of the network request, and determining whether a direction from the reference request identifier to the current request identifier exists in a procedure direction table; and if the direction exists in the procedure direction table, calculating a time difference between a current time when the network request is received and a timestamp of the reference request identifier recorded in the procedure information; and
determining whether the calculated time difference is within a range of time difference between the current request identifier and the reference request identifier recorded in the procedure direction table; if the calculated time difference is not within the range of time difference, returning to a startpoint request identifier in a requesting procedure in which the current request identifier is located.

3. The method according to claim 2, further comprising:
distributing a tracking code for a network request corresponding to the startpoint request identifier when responding to the network request corresponding to the startpoint request identifier, wherein the tracking code comprises the startpoint request identifier and a timestamp for distributing the tracking code.

4. The method according to claim 1, wherein identifying a current request identifier of the network request comprises:
formatting the network request into a formatted request of a corresponding parameter type, wherein the formatted request corresponds to a unique identifier and the unique identifier is taken as the current request identifier of the network request.

5. The method according to claim 4, further comprising:
querying whether the formatted request has a corresponding unique identifier in a preset learning result; and if the unique identifier of the formatted request corresponding to the network request is not found, recording a URL of the network request, accumulating the number of times that the URL appears, and distributing a tracking code for the network request when responding to the network request, wherein the tracking code comprises the current request identifier of the network request and a timestamp for distributing the tracking code.

6. The method according to claim 1, further comprising:
if the current request identifier is the startpoint request identifier, distributing a tracking code for the network request when responding to the network request, wherein the tracking code comprises the current request identifier and a timestamp for distributing the tracking code.

7. The method according to claim 6, wherein the tracking code adds the current request identifier and the timestamp to procedure information of a new network request when the new network request is initiated again based on the network request.

8. The method according to claim 2, further comprising: if the direction from the reference request identifier to the current request identifier does not exist in the procedure direction table,
distributing a tracking code for the network request when responding to the network request, wherein tracking information corresponding to the tracking code comprises the timestamp for distributing the tracking code and a set of the procedure information of the network request and the current request identifier.

9. The method according to claim 2, further comprising: if the direction from the reference request identifier to the current request identifier does not exist in the procedure direction table,
returning to a startpoint request identifier in a requesting procedure in which the current request identifier is located, and distributing a tracking code for a network request corresponding to the startpoint request identifier when responding to the network request corresponding to the startpoint request identifier, wherein the tracking code comprises the startpoint request identifier and a timestamp for distributing the tracking code.

10. The method according to claim 2, further comprising, if the calculated time difference is within the range of time difference,
distributing a tracking code for the network request when responding to the network request, wherein tracking information corresponding to the tracking code comprises a timestamp for distributing the tracking code and a set of the procedure information of the network request and the current request identifier.

11. A big-data-based business logic protection apparatus, comprising a processor and a memory storing a computer program which, when executed by the processor, causes the processor to implement the big-data-based business logic protection method according to claims 1 to 10.
